# EUROPEAN PATENT APPLICATION

(11) **EP 4 501 572 A1**
(43) Date of publication of application: **05.02.2025**
(21) Application number: 23779643.8
(22) Date of filing: 15.03.2023
(51) Int. Cl.: B29B 17/02, B09B 3/30, B09B 3/38

(54) **FUNCTIONAL LAYER REMOVAL METHOD AND FUNCTIONAL LAYER REMOVAL DEVICE**

(30) Priority: 31.03.2022 JP 2022058464
(71) Applicant: NITTO DENKO CORPORATION, Ibaraki-shi Osaka 567-8680 (JP)
(72) Inventor: YAMAMOTO Akiyoshi, Ibaraki-shi, Osaka 567-8680 (JP); KAWATAKE Fumika, Ibaraki-shi, Osaka 567-8680 (JP); YAMADA Yosuke, Ibaraki-shi, Osaka 567-8680 (JP); YAMAGUCHI Niho, Ibaraki-shi, Osaka 567-8680 (JP)
(74) Representative: Hoffmann Eitle
(86) International application number: PCT/JP2023/010191
(87) International publication number: WO 2023/189625

(57) **Abstract**

Provided is a functional layer removal method for efficiently removing a functional layer from a laminated film having the functional layer without requiring a highly alkaline condition and a high-temperature and high-pressure condition. Furthermore, a functional layer removal device that can be used for the method is provided. The functional layer removal method according to an embodiment of the present invention is a method for removing the functional layer from the laminated film having the base layer and the functional layer, and includes at least one selected from (i) bringing an aqueous solution including a surfactant, an ultrasonic wave, and a shearing force applying tool into contact with the functional layer, (ii) putting and stirring the laminated film in an aqueous solution including a surfactant, a mass ratio of the laminated film to the aqueous solution being 1:2.5 to 1:4, and (iii) bringing an aqueous solution including a surfactant into contact with the functional layer, a contact angle α of the aqueous solution with respect to the base layer being 45° or less, and a contact angle β of the aqueous solution with respect to the functional layer being greater than the contact angle α of the aqueous solution with respect to the base layer.

## Description

### TECHNICAL FIELD

The present invention relates to a functional layer removal method and a functional layer removal device.

### BACKGROUND ART

In recent years, recycling technology for, for example, reusing waste plastics has been required in order to address environmental issues.

Plastic films such as polyester films are useful as base films. Such a base film may be used as a laminated film by providing a functional layer such as a silicone release layer on the surface of the base film.

In order to, for example, reuse such a laminated film, preferably, the functional layer is removed, and the base film is recycled.

As a technique for efficiently removing the functional layer from the base film having the functional layer, a technique in which the functional layer is removed by treating the base film having the functional layer with an alkaline aqueous solution has been reported (Patent Literatures 1, 2).

However, in the techniques reported by Patent Literatures 1, 2, an alkaline aqueous solution having a pH of 10 to 14 needs to be used, and a problem arises that energy and cost for disposal of a large amount of alkaline waste liquid generated after the functional layer has been removed are large.

Furthermore, a method in which treatment is performed by using water having a high temperature and high pressure in order to remove the functional layer can be considered. However, not only a problem that energy and cost are large but also a problem that, for example, in the case of a PET (polyethylene terephthalate) base, the base may be hydrolyzed if treatment is performed by using water having a high temperature of about 150°C or higher and high pressure, may arise.

### CITATION LIST

### Patent Literature

Patent Literature 1: JP3270037B
Patent Literature 2: JP2004-27072A

### SUMMARY OF INVENTION

### Technical Problem

An object of the present invention is to provide a functional layer removal method for efficiently removing a functional layer from a laminated film having the functional layer without requiring a highly alkaline condition and a high-temperature and high-pressure condition. Furthermore, an object of the present invention is to provide a functional layer removal device that can be used for the method.

### Solution to Problem

A functional layer removal method according to one embodiment of the present invention is directed to a method for removing a functional layer from a laminated film including a base layer and the functional layer, and the method includes bringing an aqueous solution including a surfactant, an ultrasonic wave, and a shearing force applying tool into contact with the functional layer.

A functional layer removal method according to another embodiment of the present invention is directed to a method for removing a functional layer from a laminated film including a base layer and the functional layer, and the method includes putting and stirring the laminated film in an aqueous solution including a surfactant, and, in the method, a mass ratio of the laminated film to the aqueous solution is 1:2.5 to 1:4.

A functional layer removal method according to still another embodiment of the present invention is directed to a method for removing a functional layer from a laminated film including a base layer and the functional layer, and the method includes bringing an aqueous solution including a surfactant into contact with the functional layer, and, in the method, a contact angle α of the aqueous solution with respect to the base layer is 45° or less, and a contact angle β of the aqueous solution with respect to the functional layer is greater than the contact angle α of the aqueous solution with respect to the base layer.

In one embodiment, the aqueous solution including the surfactant has a pH of less than 10.

In one embodiment, the base layer is a polyester film.

In one embodiment, the functional layer is a silicone-treated layer.

A functional layer removal device according to one embodiment of the present invention is directed to a device for removing a functional layer from a laminated film including a base layer and the functional layer, and the device includes: a treatment tank configured to store an aqueous solution including a surfactant; a shearing force applying tool configured to be brought into contact with the functional layer of the laminated film in the treatment tank; and an ultrasonic wave application source configured to apply an ultrasonic wave to the functional layer in the treatment tank.

A functional layer removal device according to another embodiment of the present invention is directed to a device for removing a functional layer from a laminated film including a base layer and the functional layer, and the device includes: a discharge tank configured to discharge an aqueous solution including a surfactant and bring the aqueous solution into contact with the functional layer of the laminated film; a shearing force applying tool configured to be brought into contact with the functional layer of the laminated film; and an ultrasonic wave application source configured to apply an ultrasonic wave to the functional layer.

In one embodiment, the laminated film is a long laminated film fed from a roll body.

A functional layer removal device according to still another embodiment of the present invention is directed to a device for removing a functional layer from a laminated film including a base layer and the functional layer, and the device includes: a treatment tank configured to store an aqueous solution including a surfactant; a stirring device provided in the treatment tank; and an inlet provided in the treatment tank.

### Advantageous Effects of Invention

The present invention can provide the functional layer removal method for efficiently removing the functional layer from the laminated film having the functional layer without requiring a highly alkaline condition and a high-temperature and high-pressure condition. Furthermore, the present invention can provide the functional layer removal device that can be used for the method.

### BRIEF DESCRIPTION OF THE DRAWINGS

FIG. 1 is a schematic explanatory diagram illustrating a functional layer removal device according to one embodiment of the present invention.
FIG. 2 is a schematic explanatory diagram illustrating a functional layer removal device according to another embodiment of the present invention.
FIG. 3 is a schematic explanatory diagram illustrating a functional layer removal device according to still another embodiment of the present invention.

### DESCRIPTION OF EMBODIMENTS

When the expression "mass" is used herein, the expression may be replaced with "weight" that has been commonly used as a unit for representing a weight.

When the expression "(meth)acrylic" is used herein, the expression means "acrylic and/or methacrylic", when the expression "(meth)acrylate" is used herein, the expression means "acrylate and/or methacrylate", when the expression "(meth)allyl" is used herein, the expression means "allyl and/or methallyl", and when the expression "(meth)acrolein" is used herein, the expression means "acrolein and/or methacrolein".

### « «Functional layer removal method» »

A functional layer removal method according to an embodiment of the present invention is a method for removing a functional layer from a laminated film including a base layer and the functional layer.

### <<Laminated film>>

The laminated film may have any other appropriate layer to the extent that the effects of the present invention are not impaired as long as the laminated film includes the base layer and the functional layer. The laminated film is preferably a laminated body that has the base layer and the functional layer disposed on one surface side of the base layer, and has the functional layer as the outermost layer, and is more preferably a laminated body that has the base layer and the functional layer disposed on one surface side of the base layer, because the effects of the present invention can be further expressed.

The base layer may be referred to as base film in general. As the base layer, a base layer formed of any appropriate material can be adopted to the extent that the effects of the present invention are not impaired. Examples of such a base layer include a plastic film, a nonwoven fabric, paper, metal foil, a woven fabric, a rubber sheet, a foamed sheet, and a laminated body thereof (in particular, a laminated body including a plastic film).

Examples of the plastic film include: a plastic film including a polyester-based resin, such as polyethylene terephthalate (PET), polyethylene naphthalate (PEN), or polybutylene terephthalate (PBT); a plastic film including an olefin-based resin containing an α-olefin as a monomer component, such as polyethylene (PE), polypropylene (PP), polymethylpentene (PMP), an ethylene-propylene copolymer, or an ethylene-vinyl acetate copolymer (EVA); a plastic film including polyvinyl chloride (PVC); a plastic film including a vinyl acetate-based resin; a plastic film including polycarbonate (PC); a plastic film including polyphenylene sulfide (PPS); a plastic film including an amide-based resin, such as polyamide (nylon) or wholly aromatic polyamide (aramid); a plastic film including a polyimide-based resin; a plastic film including polyether ether ketone (PEEK); a plastic film including an olefin-based resin, such as polyethylene (PE) or polypropylene (PP); and a plastic film including a fluorine-based resin, such as polytetrafluoroethylene, polychlorotrifluoroethylene, polyvinyl fluoride, polyvinylidene fluoride, a tetrafluoroethylene-hexafluoropropylene copolymer, or a chlorofluoroethylene-vinylidene fluoride copolymer.

Examples of the nonwoven fabric include: nonwoven fabrics based on natural fibers having heat resistance such as a nonwoven fabric including Manila hemp; and synthetic resin nonwoven fabrics, such as a polypropylene resin nonwoven fabric, a polyethylene resin nonwoven fabric, and an ester-based resin nonwoven fabric.

The base layer is preferably a plastic film, more preferably a plastic film (polyester film) including the polyester-based resin, and even more preferably a plastic film (PET film) including polyethylene terephthalate (PET) because the effects of the present invention can be further expressed.

The number of the base layers may be only one, or two or more.

The base layer can have any appropriate thickness to the extent that the effects of the present invention are not impaired. The base layer preferably has a thickness of 1 µm to 500 µm because the effects of the present invention can be further expressed.

The base layer may contain any appropriate additive to the extent that the effects of the present invention are not impaired.

The functional layer is a layer that exhibits one or more functions, and any appropriate functional layer can be adopted to the extent that the effects of the present invention are not impaired. Examples of such a functional layer include a release treatment layer, a pressure-sensitive adhesive/adhesive layer, an adhesion facilitating layer, an antistatic layer, a hard coat layer, and a printed layer. The functional layer is preferably a release treatment layer, and more preferably a silicone-treated layer because the effects of the present invention can be further expressed.

Examples of the silicone-treated layer include silicone-treated layers, such as release layers and peeling layers, which are well known to a person skilled in the art.

The number of the functional layers may be only one, or two or more.

The functional layer can have any appropriate thickness to the extent that the effects of the present invention are not impaired. The functional layer preferably has a thickness of 0.01 µm to 5 µm because the effects of the present invention can be further expressed.

### <<Aqueous solution including surfactant>>

In the functional layer removal method according to the embodiment of the present invention, an aqueous solution including a surfactant is used. By using an aqueous solution including a surfactant, the functional layer can be efficiently removed from the laminated film having the functional layer without requiring a highly alkaline condition and a high-temperature and high-pressure condition.

As the surfactant, any appropriate surfactant can be adopted to the extent that the effects of the present invention are not impaired. Examples of such a surfactant include at least one selected from an anionic surfactant, a cationic surfactant, an amphoteric surfactant, and a nonionic surfactant. One kind of the surfactant may be merely used, or two or more kinds of the surfactants may be used.

As the anionic surfactant, any appropriate anionic surfactant can be adopted to the extent that the effects of the present invention are not impaired. Examples of such an anionic surfactant include fatty acid salts, polysulfonates, polycarboxylates, alkyl sulfates, alkylaryl sulfonates, alkylnaphthalene sulfonates, dialkyl sulfonates, dialkyl sulfosuccinates, alkyl phosphates, polyoxyethylene alkyl ether sulfates, polyoxyethylene alkyl aryl ether sulfates, naphthalene sulfonic acid formalin condensates, polyoxyethylene alkyl phosphate sulfonates, glycerol borate fatty acid esters, and polyoxyethylene glycerol fatty acid esters. Specific examples thereof include sodium dodecylbenzene sulfonate, sodium lauryl sulfate, sodium polyoxyethylene lauryl ether sulfate, ammonium polyoxyethylene lauryl ether sulfate, polyoxyethylene nonylphenyl ether sulfate, and sodium salts of a β-naphthalene sulfonic acid formalin condensate. One kind of the anionic surfactant may be merely used, or two or more kinds of the anionic surfactants may be used.

As the cationic surfactant, any appropriate cationic surfactant can be adopted to the extent that the effects of the present invention are not impaired. Examples of such a cationic surfactant include alkylamine salts and quaternary ammonium salts. Specific examples thereof include stearylamine acetate, trimethylcocoammonium chloride, trimethyltallowammonium chloride, dimethyldioleylammonium chloride, methyl oleyl diethanol chloride, tetramethylammonium chloride, laurylpyridinium chloride, laurylpyridinium bromide, laurylpyridinium disulfate, cetyltrimethylammonium chloride, cetylpyridinium bromide, 4-alkylmercaptopyridine, poly(vinylpyridine)-dodecyl bromide, and dodecylbenzyltriethylammonium chloride. One kind of the cationic surfactant may be merely used, or two or more kinds of the cationic surfactants may be used.

As the amphoteric surfactant, any appropriate amphoteric surfactant can be adopted to the extent that the effects of the present invention are not impaired. Examples of such an amphoteric surfactant include amino carboxylates, alkyl betaine-based surfactants, and alkyl imidazoline derivatives. Specific examples thereof include lauramidopropyl betaine. One kind of the amphoteric surfactant may be merely used, or two or more kinds of the amphoteric surfactants may be used.

As the nonionic surfactant, any appropriate nonionic surfactant can be adopted to the extent that the effects of the present invention are not impaired. Examples of such a nonionic surfactant include polyoxyethylene alkyl ethers, polyoxyalkylene derivatives, polyoxyethylene phenyl ethers, sorbitan fatty acid esters, polyoxyethylene sorbitan fatty acid esters, and alkyl allyl ethers. Specific examples thereof include polyoxyethylene lauryl ether, polyoxyethylene oleyl ether, sorbitan fatty acid ester, and polyoxyethylene octyl phenyl ether. One kind of the nonionic surfactant may be merely used, or two or more kinds of the nonionic surfactants may be used.

As the concentration of the surfactant in the aqueous solution including the surfactant, any appropriate concentration can be adopted to the extent that the effects of the present invention are not impaired. The concentration of the surfactant in the aqueous solution including the surfactant is preferably 0.005 mass% to 10 mass%, more preferably 0.01 mass% to 8 mass%, even more preferably 0.03 mass% to 6 mass%, and particularly preferably 0.05 mass% to 5 mass% because the effects of the present invention can be further expressed.

The pH of the aqueous solution including the surfactant is preferably less than 11, more preferably 3 to 11, even more preferably 4 to 10, and particularly preferably 5 to 9 because the effects of the present invention can be further expressed. In a case where the pH of the aqueous solution including the surfactant is within the above-described range, the functional layer can be efficiently removed from the laminated film having the functional layer without requiring a highly alkaline condition. Particularly, the pH of a waste liquid after removal of the functional layer is not in a highly alkaline region, and therefore, energy and cost necessary for disposal treatment can be reduced.

A contact angle α of the aqueous solution including the surfactant with respect to the base layer is preferably 45° or less, and a contact angle β of the aqueous solution including the surfactant with respect to the functional layer is greater than the contact angle α thereof with respect to the base layer because the effects of the present invention can be further expressed. In a case where the contact angle α of the aqueous solution including the surfactant with respect to the base layer is 45° or less, and the contact angle β of the aqueous solution including the surfactant with respect to the functional layer is greater than the contact angle α thereof with respect to the base layer, the surface of the base layer is easily made wet, and the surface of the functional layer is not easily made wet. As a result, when removal (for example, releasing) of the functional layer from the base layer is started, the aqueous solution including the surfactant can easily enter between the base layer and the functional layer, and removal (for example, releasing) of the functional layer can be promoted.

The contact angle α of the aqueous solution including the surfactant with respect to the base layer is more preferably 40° or less, even more preferably 35° or less, and particularly preferably 30° or less because the effects of the present invention can be further expressed.

The contact angle β of the aqueous solution including the surfactant with respect to the functional layer is preferably 88° or less because the effects of the present invention can be further expressed.

As the temperature of the aqueous solution including the surfactant, any appropriate temperature can be set by the functional layer removal method. For example, in Embodiment 1 described below, the temperature of the aqueous solution including the surfactant is preferably 10°C to 70°C. For example, in Embodiment 2 described below, the temperature of the aqueous solution including the surfactant is preferably 50°C to 130°C.

### «Typical embodiments of functional layer removal method»

The functional layer removal method according to the embodiment of the present invention can be typically implemented as the following Embodiments 1 to 3.
(Embodiment 1) The aqueous solution including the surfactant, an ultrasonic wave, and a shearing force applying tool are brought into contact with the functional layer.
(Embodiment 2) The laminated film is put and stirred in the aqueous solution including the surfactant, and the mass ratio of the laminated film to the aqueous solution is 1:2.5 to 1:4.
(Embodiment 3) The aqueous solution including the surfactant is brought into contact with the functional layer, and the contact angle α of the aqueous solution with respect to the base layer is 45° or less, and the contact angle β of the aqueous solution with respect to the functional layer is greater than the contact angle α of the aqueous solution with respect to the base layer.

### <Embodiment 1>

The functional layer removal method according to Embodiment 1 of the present invention is a method for removing the functional layer from the laminated film including the base layer and the functional layer, and includes bringing the aqueous solution including the surfactant, an ultrasonic wave, and a shearing force applying tool into contact with the functional layer.

Typical examples of the functional layer removal method according to Embodiment 1 include a method (Embodiment 1-1) in which the functional layer is removed by bringing a shearing force applying tool into contact with the functional layer of the laminated film while an ultrasonic wave is applied to the functional layer, in the aqueous solution including the surfactant, and a method (Embodiment 1-2) in which the functional layer is removed by adding the aqueous solution including the surfactant to the functional layer while an ultrasonic wave is applied to the functional layer of the laminated film, and a shearing force applying tool is brought into contact with the functional layer.

As the shearing force applying tool, any appropriate tool can be adopted to the extent that the effects of the present invention are not impaired. Examples of such a tool include a rotary brush having a brush portion made of a material such as a polyolefin, polyester, nylon, a PET resin, vegetable fibers, or a metal, a belt sander having an abrasive belt, and an electric tool (hand grinder, precision grinder, electric cutting tool, or the like) having a file (paper, cloth, metal) because the effects of the present invention can be further expressed. Furthermore, the tool may be a tool having means for applying an ultrasonic wave (for example, a brush having its tip ends vibrated by an ultrasonic wave).

In the functional layer removal method of Embodiment 1, as a contact condition of the shearing force applying tool, any appropriate contact condition can be adopted to the extent that the effects of the present invention are not impaired. As the contact condition of such a shearing force applying tool, the temperature is preferably 10°C to 70°C, the contact time of the shearing force applying tool is preferably 1 second to 30 minutes and more preferably 10 seconds to 10 minutes, and the number of revolutions of the shearing force applying tool is preferably 300 rpm to 25000 rpm, because the effects of the present invention can be further expressed.

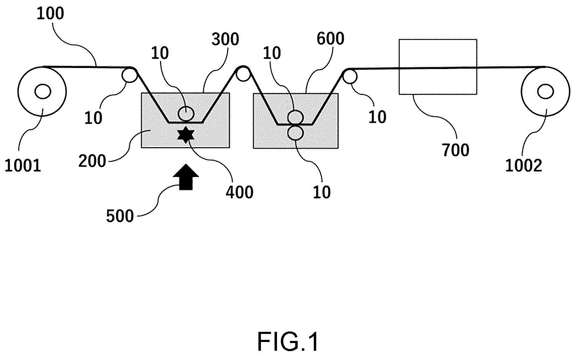

For the functional layer removal method of Embodiment 1-1, any appropriate functional layer removal device can be adopted to the extent that the effects of the present invention are not impaired. Such a functional layer removal device is typically a device for removing the functional layer from a laminated film 100, and is, for example, a functional layer removal device that includes a treatment tank 300 for storing an aqueous solution 200 including the surfactant, a shearing force applying tool 400 which is brought into contact with the functional layer side of the laminated film 100 in the treatment tank 300, and an ultrasonic wave application source 500 for applying an ultrasonic wave to the functional layer in the treatment tank 300, as shown in FIG. 1, because the effects of the present invention can be further expressed. The ultrasonic wave application source 500 can be disposed at any appropriate position to the extent that the effects of the present invention are not impaired as long as the position is a position at which an ultrasonic wave can be applied to the functional layer. The ultrasonic wave application source 500 may be provided in the treatment tank 300 or may be provided in the shearing force applying tool 400. Rollers 10 may be disposed as appropriate for transporting the laminated film 100, as shown in FIG. 1.

The film transported through the functional layer removal device shown in FIG. 1 may be supplied into a washing tank 600 such as a water bath. The film transported through the functional layer removal device shown in FIG. 1 may be supplied into a dryer 700.

The laminated film 100 to be supplied to the functional layer removal device shown in FIG. 1 may be a long laminated film fed from a roll body 1001. The film to be collected after the functional layer has been removed may be wound as a roll body 1002.

The above-described functional layer removal device is implemented as one embodiment of the present invention. That is, the functional layer removal device according to one embodiment of the present invention is a device for removing the functional layer from the laminated film including the base layer and the functional layer, and includes a treatment tank for storing an aqueous solution including the surfactant, a shearing force applying tool which is brought into contact with the functional layer of the laminated film in the treatment tank, and an ultrasonic wave application source for applying an ultrasonic wave to the functional layer in the treatment tank.

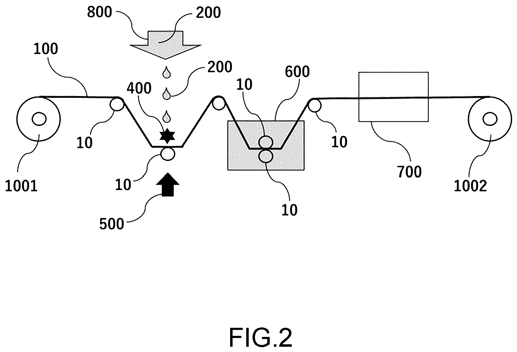

In the functional layer removal method of Embodiment 1-2, any appropriate functional layer removal device can be adopted to the extent that the effects of the present invention are not impaired. Such a functional layer removal device is typically a device for removing the functional layer from a laminated film 100, and is, for example, a functional layer removal device that includes a discharge tank 800 for discharging an aqueous solution 200 including the surfactant and bringing the aqueous solution 200 into contact with the functional layer of the laminated film 100, a shearing force applying tool 400 which is brought into contact with the functional layer of the laminated film 100, and an ultrasonic wave application source 500 for applying an ultrasonic wave to the functional layer, as shown in FIG. 2, because the effects of the present invention can be further expressed. The ultrasonic wave application source 500 may be provided in the shearing force applying tool 400. Rollers 10 may be disposed as appropriate for transporting the laminated film 100, as shown in FIG. 2.

The film transported through the functional layer removal device shown in FIG. 2 may be supplied into a washing tank 600 such as a water bath. The film transported through the functional layer removal device shown in FIG. 2 may be supplied into a dryer 700.

The laminated film 100 to be supplied to the functional layer removal device shown in FIG. 2 may be a long laminated film fed from a roll body 1001. A film to be collected after the functional layer has been removed may be wound as a roll body 1002.

The above-described functional layer removal device is implemented as another embodiment of the present invention. That is, the functional layer removal device according to another embodiment of the present invention is a device for removing the functional layer from the laminated film including the base layer and the functional layer, and includes a discharge tank for discharging an aqueous solution including the surfactant and bringing the aqueous solution into contact with the functional layer of the laminated film, a shearing force applying tool which is brought into contact with the functional layer of the laminated film, and an ultrasonic wave application source for applying an ultrasonic wave to the functional layer.

### <Embodiment 2>

A functional layer removal method according to Embodiment 2 of the present invention is a method for removing the functional layer from the laminated film including the base layer and the functional layer, and includes putting and stirring the laminated film in an aqueous solution including the surfactant, and, in the method, a mass ratio of the laminated film to the aqueous solution is 1:2.5 to 1:4.

Typical examples of the functional layer removal method of Embodiment 2 include a method in which an aqueous solution including the surfactant is put in a treatment tank having a stirring device, the laminated film (which is pulverized as necessary) including the base layer and the functional layer is put in the treatment tank, and the resultant product is stirred to remove the functional layer.

In the functional layer removal method of Embodiment 2, a mass ratio of the laminated film to the aqueous solution, that is, a solid-liquid ratio, is preferably 1:2.5 to 1:4 because the effects of the present invention can be further expressed. In addition to the shearing force being generated between the aqueous solution and the laminated film, the shearing force can be generated through collision between the laminated films. If the proportion of the aqueous solution is excessively large outside the above-described range of the solid-liquid ratio, chance of contact between the laminated films in a reaction vessel is reduced, so that the shearing force applied to the laminated films may be reduced, and the effect of removing the functional layer may be degraded. If the proportion of the aqueous solution is excessively small outside the above-described range of the solid-liquid ratio, stirring may become difficult due to a small amount of the aqueous solution in the reaction vessel, a shearing force is unlikely be generated by the stirring, and the effect of removing the functional layer may be degraded.

As a stirring condition in the functional layer removal method of Embodiment 2, any appropriate stirring condition can be adopted to the extent that the effects of the present invention are not impaired. As such a stirring condition, the temperature is preferably 50°C to 130°C, the stirring time is preferably 10 minutes to 180 minutes and more preferably 30 minutes to 120 minutes, and the number of revolutions in the stirring is preferably 300 rpm to 2500 rpm and more preferably 700 rpm to 1500 rpm, because the effects of the present invention can be further expressed

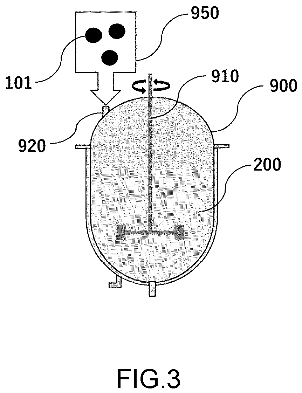

In the functional layer removal method of Embodiment 2, any appropriate functional layer removal device can be adopted to the extent that the effects of the present invention are not impaired. Such a functional layer removal device is typically a device for removing the functional layer from a laminated film 100, and is, for example, a functional layer removal device that includes a treatment tank 900 for storing an aqueous solution 200 including the surfactant, a stirring device 910 provided in the treatment tank 900, and an inlet 920 provided in the treatment tank 900, as shown in FIG. 3, because the effects of the present invention can be further expressed.

In the functional layer removal device shown in FIG. 3, the laminated film 100 to be supplied through the inlet 920 is preferably a laminated film 101 that has been pulverized by a pulverizer 950 because the effects of the present invention can be further expressed.

The above-described functional layer removal device is implemented as still another embodiment of the present invention. That is, the functional layer removal device according to still another embodiment of the present invention is a device for removing the functional layer from the laminated film including the base layer and the functional layer, and includes a treatment tank for storing an aqueous solution including the surfactant, a stirring device provided in the treatment tank, and an inlet provided for the laminated film in the treatment tank.

### <Embodiment 3>

The functional layer removal method according to Embodiment 3 of the present invention is a method for removing the functional layer from the laminated film including the base layer and the functional layer, and includes bringing an aqueous solution including the surfactant into contact with the functional layer, and, in the method, the contact angle α of the aqueous solution with respect to the base layer is 45° or less, and the contact angle β of the aqueous solution with respect to the functional layer is greater than the contact angle α of the aqueous solution with respect to the base layer.

As the functional layer removal method of Embodiment 3, any appropriate method can be adopted to the extent that the effects of the present invention are not impaired as long as the aqueous solution includes the surfactant and is brought into contact with the functional layer such that the contact angle α of the aqueous solution with respect to the base layer is 45° or less, and the contact angle β of the aqueous solution with respect to the functional layer is greater than the contact angle α of the aqueous solution with respect to the base layer.

In the functional layer removal method of Embodiment 3, any appropriate functional layer removal device can be adopted to the extent that the effects of the present invention are not impaired. Examples of such a functional layer removal device include the above-described functional layer removal devices as shown in FIG. 1 to FIG. 3 because the effects of the present invention can be further expressed.

### Examples

The present invention will be specifically described below by way of examples. However, the present invention is not limited to these examples in any way. The tests and evaluation methods for the examples and the like are as follows. The description "part(s)" represents "part(s) by mass" unless otherwise specified. The description "%" represents "mass%" unless otherwise specified

### <Measurement of contact angle α with respect to base layer>

By using a micropipetter (pipetman GP100G manufactured by GILSON), 50 µL of an aqueous solution in which the concentration of the surfactant was adjusted to 0.2 mass% was dropped onto a polyester film surface of a DIAFOIL MRF38 (manufactured by Mitsubishi Chemical Corporation), a photograph was taken when five minutes elapsed after the dropping, and the contact angle was measured.

### <Measurement of contact angle β with respect to functional layer>

By using a micropipetter (pipetman GP100G manufactured by GILSON), 50 µL of an aqueous solution in which the concentration of the surfactant was adjusted to 0.2 mass% was dropped onto a silicone release treatment layer surface of a DIAFOIL MRF38 (manufactured by Mitsubishi Chemical Corporation), a photograph was taken when five minutes elapsed after the dropping, and the contact angle was measured.

### <Measurement of pH of aqueous solution including surfactant>

The surfactant was dropped onto a pH meter (LAQUA twin AS-pH-22 manufactured by HORIBA, Ltd.), and a pH was measured.

### <Measurement of amount of silicone remaining on film after removal treatment>

50 mg of a dried laminated polyester film was weighed and put into a sealable container, nitric acid was added as acid, and the container was tightly sealed. Microwaves were applied into the tightly sealed container by using an UltraWAVE manufactured by Milestone, and pressurized acid decomposition was performed at a maximum of 250°C. After the acid decomposition, ultrapure water was added and the volume was adjusted to 20 mL, and quantitative analysis of an amount of Si was performed by ICP-AES (SPS-3520UV manufactured by Hitachi High-Tech Science Corporation) or ICP-MS (8800 manufactured by Agilent Technologies). The polyester film contained silica particles before the silicone release treatment was performed in order to impart releasability. Therefore, an amount of Si derived from the silica particles was subtracted from the measured value of an amount of the remaining silicone.

### [Example 1]

An aqueous solution of the surfactant which was adjusted so as to contain EMULGEN A60 (manufactured by Kao Corporation) as the surfactant at a concentration of 0.2 mass% was heated to 50°C, a laminated polyester film (in which "KS-847T" (Shin-Etsu Silicone) was applied to "ASTROLL FQ00 #25" (KOLON INDUSTRIES, INC.) and dried) which had a silicone release treatment layer on the polyester film surface was put in the aqueous solution, and the surface of the silicone release treatment layer was rubbed for three minutes by using an ultrasonic brush (AMATERUS CO.,LTD, ultrasonically vibrated toothbrush K10).

After the rubbing for three minutes, the laminated polyester film was taken out from the aqueous solution of the surfactant and washed with ion exchanged water.

After the washing, a water content of the laminated polyester film was evaporated by a dryer, to obtain a film (1) from which the silicone release treatment layer was removed.

Table 1 indicates the result.

### [Example 2]

A film (2) from which the silicone release treatment layer was removed was obtained in the same manner as in Example 1 except that the surfactant was changed from EMULGEN A60 (manufactured by Kao Corporation) to EMULGEN 105 (manufactured by Kao Corporation).

Table 1 indicates the result.

### [Example 3]

A film (3) from which the silicone release treatment layer was removed was obtained in the same manner as in Example 1 except that the temperature to which the aqueous solution of the surfactant was heated was changed to 20°C.

Table 1 indicates the result.

### [Comparative example 1]

A film (C1) from which the silicone release treatment layer was removed was obtained in the same manner as in Example 1 except that no surfactant was used.

Table 1 indicates the result.

**[Table 1]**

| | Ex. 1 | Ex. 2 | Ex. 3 | Comp. Ex. 1 |
|---|---|---|---|---|
| Surfactant | EMULGEN A60 | EMULGEN 105 | EMULGEN A60 | - |
| Contact angle α (°) | 22.3 | 12 | 22.3 | 63 |
| Contact angle β (°) | 82.8 | 34 | 82.8 | 92 |
| Concentration of surfactant (mass%) | 0.2 | 0.2 | 0.2 | - |
| pH of aqueous solution of surfactant | 6.83 | 5.92 | 6.83 | - |
| Number of revolutions of brush (rpm) | 22000 | 22000 | 22000 | 22000 |
| Treatment temperature (°C) | 50 | 50 | 20 | 50 |
| Treatment time (minutes) | 3 | 3 | 3 | 3 |
| Amount of remaining silicone (ppm) | 13 | 42 | 80 | 660 |

### [Example 4]

In a reaction vessel having a separable cover, a thermometer, a Liebig condenser, a vacuum seal, and a stirring device (disperser blade), 200 g of an aqueous solution of the surfactant which was adjusted so as to contain EMULGEN A60 (manufactured by Kao Corporation) as the surfactant at a concentration of 0.2 mass%, and 50 g of a pulverized product of a laminated polyester film, which was obtained by pulverizing the laminated polyester film (Mitsubishi Chemical Corporation, DIAFOIL MRF38) having a silicone release treatment layer on the polyester film surface into the length of a maximum of 3 mm were put, and stirred at 90°C for 60 minutes at 1300 rpm.

After the stirring, the pulverized product of the laminated polyester film was taken out from the aqueous solution of the surfactant, and washed with ion exchanged water.

After the washing, a water content of the pulverized product of the laminated polyester film was evaporated by a dryer, to obtain a film (4) from which the silicone release treatment layer was removed.

Table 2 indicates the result.

### [Example 5]

A film (5) from which the silicone release treatment layer was removed was obtained in the same manner as in Example 4 except that 200 g of an aqueous solution of the surfactant, which was adjusted so as to contain EMULGEN A60 (manufactured by Kao Corporation) as the surfactant at a concentration of 0.08 mass% was used as the aqueous solution of the surfactant, 80 g of a pulverized product of the laminated polyester film was used, and the stirring conditions were changed so as to perform the stirring at 100°C for 60 minutes at 700 rpm.

Table 2 indicates the result.

### [Example 6]

A film (6) from which the silicone release treatment layer was removed was obtained in the same manner as in Example 4 except that the stirring conditions were changed so as to perform the stirring at 120°C for 30 minutes.

Table 2 indicates the result.

### [Example 7]

A film (7) from which the silicone release treatment layer was removed was obtained in the same manner as in Example 6 except that the surfactant was changed from EMULGEN A60 (manufactured by Kao Corporation) to EMULGEN A90 (manufactured by Kao Corporation).

Table 2 indicates the result.

### [Example 8]

A film (8) from which the silicone release treatment layer was removed was obtained in the same manner as in Example 6 except that the surfactant was changed from EMULGEN A60 (manufactured by Kao Corporation) to EMAL 2F-30 (manufactured by Kao Corporation).

Table 2 indicates the result.

### [Example 9]

A film (9) from which the silicone release treatment layer was removed was obtained in the same manner as in Example 6 except that the surfactant was changed from EMULGEN A60 (manufactured by Kao Corporation) to EMULGEN 105 (manufactured by Kao Corporation).

Table 2 indicates the result.

### [Comparative example 2]

A film (C2) from which the silicone release treatment layer was removed was obtained in the same manner as in Example 4 except that no surfactant was used, and the stirring conditions were changed so as to perform the stirring at 150°C for 60 minutes.

Table 2 indicates the result.

### [Comparative example 3]

A film (C3) from which the silicone release treatment layer was removed was obtained in the same manner as in Example 4 except that an amount of the aqueous solution of the surfactant was changed to 50 g.

Table 2 indicates the result.

### [Comparative example 4]

A film (C4) from which the silicone release treatment layer was removed was obtained in the same manner as in Example 4 except that an amount of the pulverized product of the laminated polyester film was changed to 20 g.

Table 2 indicates the result.

### [Comparative example 5]

A film (C5) from which the silicone release treatment layer was removed was obtained in the same manner as in Example 4 except that an amount of the pulverized product of the laminated polyester film was changed to 40 g.

Table 2 indicates the result.

**[Table 2]**

| | Ex. 4 | Ex. 5 | Ex. 6 | Ex. 7 | Ex. 8 | Ex. 9 |
|---|---|---|---|---|---|---|
| Solid-liquid ratio (mass ratio) | 1:4 | 1:2.5 | 1:4 | 1:4 | 1:4 | 1:4 |
| Surfactant | EMULGEN A60 | EMULGEN A60 | EMULGEN A60 | EMULGEN A90 | EMAL 2F-30 | EMULGEN 105 |
| Contact angle α (°) | 22.3 | 22.3 | 22.3 | 27.5 | 40 | 12 |
| Contact angle β (°) | 82.8 | 82.8 | 82.8 | 87 | 53.5 | 34 |
| Concentration of surfactant (mass%) | 0.2 | 0.08 | 0.2 | 0.2 | 0.2 | 0.2 |
| pH of aqueous solution of surfactant | 6.83 | 7.00 | 6.83 | 6.50 | 8.00 | 5.92 |
| Number of revolutions in stirring (rpm) | 1300 | 700 | 1300 | 1300 | 1300 | 1300 |
| Stirring temperature (°C) | 90 | 100 | 120 | 120 | 120 | 120 |
| Stirring time (minutes) | 60 | 60 | 30 | 30 | 30 | 30 |
| Amount of remaining silicone (ppm) | 17 | 78 | 7 | 0 | 24 | 55 |

| | Comp. Ex. 2 | Comp. Ex. 3 | Comp. Ex. 4 | Comp. Ex. 5 | | |
|---|---|---|---|---|---|---|
| Solid-liquid ratio (mass ratio) | 1:4 | 1:1 | 1:10 | 1:5 | | |
| Surfactant | - | EMULGEN A60 | EMULGEN A60 | EMULGEN A60 | | |
| Contact angle α (°) | 63 | 22.3 | 22.3 | 22.3 | | |
| Contact angle β (°) | 92 | 82.8 | 82.8 | 82.8 | | |
| Concentration of surfactant (mass%) | - | 0.2 | 0.2 | 0.2 | | |
| pH of aqueous solution of surfactant | - | 6.83 | 6.83 | 6.83 | | |
| Number of revolutions in stirring (rpm) | 1300 | 1300 | 1300 | 1300 | | |
| Stirring temperature (°C) | 150 | 90 | 90 | 90 | | |
| Stirring time (minutes) | 60 | 60 | 60 | 60 | | |
| Amount of remaining silicone (ppm) | 200 | Was not able to be stirred | 1500 | 1500 | | |

### INDUSTRIAL APPLICABILITY

By using the functional layer removal method according to the embodiments of the present invention, and the functional layer removal device according to the embodiments of the present invention, the functional layer can be efficiently removed from the base film having the functional layer without substantially requiring energy and cost, and the functional layer removal method and device can be used for recycling technology for, for example, reusing waste plastics.

### DESCRIPTION OF THE REFERENCE CHARACTERS

- 10: roller
- 100: laminated film
- 101: pulverized laminated film
- 200: aqueous solution including surfactant
- 300: treatment tank
- 400: shearing force applying tool
- 500: ultrasonic wave application source
- 600: washing tank
- 700: dryer
- 800: discharge tank
- 900: treatment tank
- 910: stirring device
- 920: inlet
- 950: pulverizer
- 1001: roll body
- 1002: roll body

## Claims

1. A functional layer removal method for removing a functional layer from a laminated film including a base layer and the functional layer, the method comprising
bringing an aqueous solution including a surfactant, an ultrasonic wave, and a shearing force applying tool into contact with the functional layer.

2. A functional layer removal method for removing a functional layer from a laminated film including a base layer and the functional layer, the method comprising
putting and stirring the laminated film in an aqueous solution including a surfactant, wherein
a mass ratio of the laminated film to the aqueous solution is 1:2.5 to 1:4.

3. A functional layer removal method for removing a functional layer from a laminated film including a base layer and the functional layer, the method comprising
bringing an aqueous solution including a surfactant into contact with the functional layer, wherein
a contact angle α of the aqueous solution with respect to the base layer is 45° or less, and a contact angle β of the aqueous solution with respect to the functional layer is greater than the contact angle α of the aqueous solution with respect to the base layer.

4. The functional layer removal method according to any one of claims 1 to 3, wherein the aqueous solution including the surfactant has a pH of less than 10.

5. The functional layer removal method according to any one of claims 1 to 3, wherein the base layer is a polyester film.

6. The functional layer removal method according to any one of claims 1 to 3, wherein the functional layer is a silicone-treated layer.

7. A functional layer removal device for removing a functional layer from a laminated film including a base layer and the functional layer, the device comprising:
a treatment tank configured to store an aqueous solution including a surfactant;
a shearing force applying tool configured to be brought into contact with the functional layer of the laminated film in the treatment tank; and
an ultrasonic wave application source configured to apply an ultrasonic wave to the functional layer in the treatment tank.

8. A functional layer removal device for removing a functional layer from a laminated film including a base layer and the functional layer, the device comprising:
a discharge tank configured to discharge an aqueous solution including a surfactant and bring the aqueous solution into contact with the functional layer of the laminated film;
a shearing force applying tool configured to be brought into contact with the functional layer of the laminated film; and
an ultrasonic wave application source configured to apply an ultrasonic wave to the functional layer.

9. The functional layer removal device according to claim 7 or 8, wherein the laminated film is a long laminated film fed from a roll body.

10. A functional layer removal device for removing a functional layer from a laminated film including a base layer and the functional layer, the device comprising:
a treatment tank configured to store an aqueous solution including a surfactant;
a stirring device provided in the treatment tank; and
an inlet provided in the treatment tank.
